# EUROPEAN PATENT APPLICATION

(11) **EP 4 831 919 A1**
(43) Date of publication of application: **28.10.2026**
(21) Application number: 26171569.2
(22) Date of filing: 10.04.2026
(51) Int. Cl.: G06T 7/30, G01C 1/00

(54) **DISPLAY DEVICE, CONTROL DEVICE AND CONTROL METHOD THEREOF, DISPLAY SYSTEM, AND PROGRAM**

(30) Priority: 25.04.2025 JP 2025073557
(71) Applicant: HONDA MOTOR CO., LTD., Tokyo 105-8404 (JP)
(72) Inventor: GOTO, Takeru, Wako-shi, Saitama, 3510193 (JP); OKA, Keisuke, Wako-shi, Saitama, 3510193 (JP); NATORI, Yoichi, Wako-shi, Saitama, 3510193 (JP); MASUDA, Natsuki, Wako-shi, Saitama, 3510193 (JP)
(74) Representative: Kiwit, Benedikt

(57) **Abstract**

A control device (301) of a display device (311) includes acquiring means for acquiring a plurality of images (404) of an environment around a moving body (100) captured at different times by an image capturing unit (104) mounted on the moving body, display control means for sequentially displaying the plurality of images on the display device, requesting means for requesting the moving body to rotate, and estimation means for estimating an amount of rotation of the moving body based on the plurality of images and a time stamp attached to each of the plurality of images.

## Description

### BACKGROUND OF THE INVENTION

### Field of the Invention

The present invention relates to a display device, a control device and a control method thereof, a display system, and a program.

Various techniques for controlling a moving body from a distance have been proposed. Japanese Patent Laid-Open No. 2023-125011 describes a technique in which an image captured by a camera of the moving body is transmitted to a remote smartphone, and a remote user operates the moving body by viewing the image. In a case where the front of the user who operates the moving body from a distance coincides with the front of the moving body, the user can operate the moving body without feeling discomfort.

### SUMMARY OF THE INVENTION

One aspect of the present invention improves convenience of the user who operates the moving body from a distance.

The present disclosure in its first aspect provides a control device as specified in claim 1. Optional features are specified in claims 2 to 5.

The present disclosure in its second aspect provides a display system as specified in claim 6. An optional feature is specified in claim 7.

The present disclosure in its third aspect provides a program as specified in claim 8.

The present disclosure in its fourth aspect provides a method as specified in claim 9.

Further features of the present invention will become apparent from the following description of exemplary embodiments (with reference to the attached drawings).

### BRIEF DESCRIPTION OF THE DRAWINGS

FIG. 1 is a block diagram illustrating a configuration example of a moving body control system according to some embodiments;
FIG. 2 is a block diagram illustrating a configuration example of a moving body according to some embodiments;
FIG. 3 is a block diagram illustrating a configuration example of an HMD according to some embodiments;
FIG. 4A is a schematic diagram illustrating an example of changing each of a display range and an avatar according to some embodiments;
FIG. 4B is a schematic diagram illustrating an example of changing each of the display range and the avatar according to some embodiments;
FIG. 5 is a schematic diagram illustrating an example of changing each of the display range and the avatar according to some embodiments;
FIG. 6 is a flowchart illustrating an operation example of the moving body according to some embodiments; and
FIG. 7 is a flowchart illustrating an operation example of the HMD according to some embodiments.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### Configuration example of the moving body control system

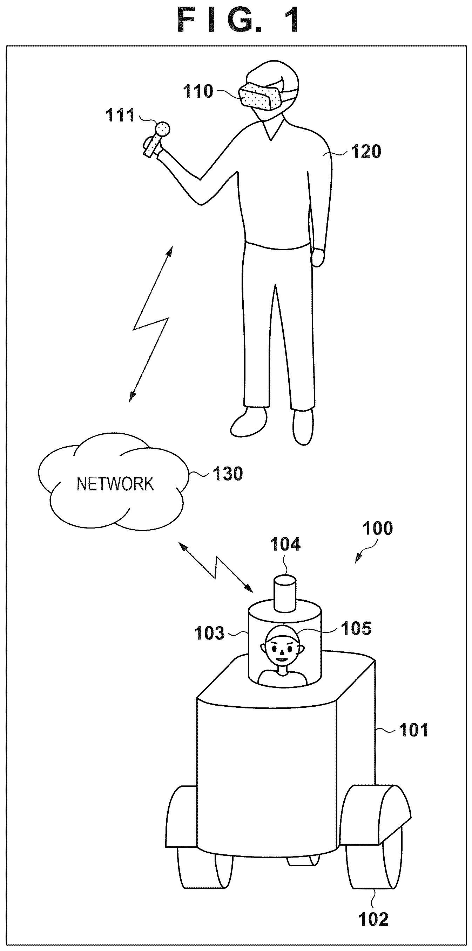

A configuration example of a moving body control system according to some embodiments will be described with reference to FIG. 1. The moving body control system in FIG. 1 includes a moving body 100, a head mounted display (HMD) 110, and a controller 111. The moving body 100 is controlled based on an operation performed by a user 120 on the HMD 110 and the controller 111. The moving body 100 and the HMD 110 can communicate through a network 130. The HMD 110 is a device located outside the moving body 100 (external device). The network 130 may be a personal area network (PAN), a local area network (LAN), a cellular network, a private network, the Internet, other networks, or any combination thereof. The HMD 110 and the controller 111 may be communicable through the network 130 or may be directly communicable by Bluetooth (registered trademark) or the like. The user 120 may be located far from the moving body 100.

The moving body 100 includes a body 101, wheels 102, a display device 103, and an image capturing unit 104. In the example of FIG. 1, the moving body 100 is a vehicle that moves on the ground using the wheels 102. Alternatively, the moving body 100 may be an aircraft (for example, a drone) that moves in the air, may be a robot that moves on the ground using two or more legs, or may be other forms of moving bodies. Hereinafter, a case where the moving body 100 is a vehicle will be described, but the same description applies to other forms of moving bodies.

An avatar 105 of the user 120 is displayed on the display device 103. The avatar 105 includes at least a face. The avatar 105 may further include some or all of a torso. In the example of FIG. 1, a portion above the chest of the avatar 105 is displayed. The moving body 100 displays the face of the avatar 105 so as to align with a direction of the face of the user 120. For example, in a case where the face of the user 120 is oriented to the front, the moving body 100 displays the avatar 105 such that the face of the avatar 105 is oriented to the front of the moving body 100. In a case where the face of the user 120 is oriented to the left side, the moving body 100 displays the avatar 105 such that the face of the avatar 105 is oriented to the left side of the moving body 100. As a result, a person around the moving body 100 can recognize which direction the face of the user 120 is oriented in. Furthermore, the moving body 100 may display the line of sight of the avatar 105 so as to align with a direction of the line of sight of the user 120.

The display device 103 may have a display surface facing only one direction, or may have a display surface facing a plurality of directions. The display surface facing the plurality of directions may face 180 degrees, may face 360 degrees, or may face other angles. The display surface facing the plurality of directions may be constituted by one curved display surface, or may be constituted by a plurality of flat or curved display surfaces.

In a case where the display device 103 has a display surface facing only one direction, a direction of the face of the avatar 105 may be represented by a depiction of the face of the avatar 105. In a case where the display device 103 has a display surface facing a plurality of directions, the direction of the face of the avatar 105 may be represented by a position at which the face of the avatar 105 is displayed. For example, the face of the avatar 105 oriented to the left side of the moving body 100 may be represented by displaying, on the left side of the display device 103, the avatar 105 depicted as being oriented to the front. Furthermore, the display position of the avatar 105 and the depiction of the avatar 105 may be combined to represent the direction of the face of the avatar 105. The same applies to the representation of a direction of the torso of the avatar 105. In the following description, the statement that "A control device 201 of the moving body 100 displays the avatar 105 on the display device 103" may be expressed by "The moving body 100 displays the avatar 105."

The image capturing unit 104 captures an environment around the moving body 100. In the following description, the environment around the moving body 100 is referred to as a moving body environment. The image of the moving body environment is transmitted to the HMD 110. The image capturing unit 104 can capture an image with an angle of view larger than the angle of view of an image displayed on the HMD 110. For example, the image capturing unit 104 may be an omnidirectional camera. In this case, the image capturing unit 104 captures an omnidirectional image. Alternatively, the image capturing unit 104 may include a fisheye lens, and the image capturing unit 104 may capture a wide-angle image.

The image of the moving body environment may be a still image or a moving image. For example, the moving body 100 may sequentially transmit, to the HMD 110, each frame of the moving image captured by the image capturing unit 104 at a predetermined frame rate.

The HMD 110 is worn on the head of the user 120. The HMD 110 displays a part of the image of the moving body environment. The user 120 changes a posture of the HMD 110 by moving his/her head. The HMD 110 changes a portion to be displayed of the image of the moving body environment in response to the change in its posture. As a result, the user 120 can visually recognize a desired portion of the moving body environment.

The controller 111 acquires an instruction from the user 120. The instruction from the user 120 includes an instruction related to movement of the moving body 100. The instruction related to the movement of the moving body 100 may include an instruction to rotate the moving body 100 on the spot (hereinafter, rotation instruction) and an instruction for the moving body 100 to travel straight (hereinafter, straight travel instruction). Furthermore, the instruction related to the movement of the moving body 100 may include an instruction for the moving body 100 to travel backward or an instruction for the moving body 100 to move along a curve.

### Configuration example of the moving body

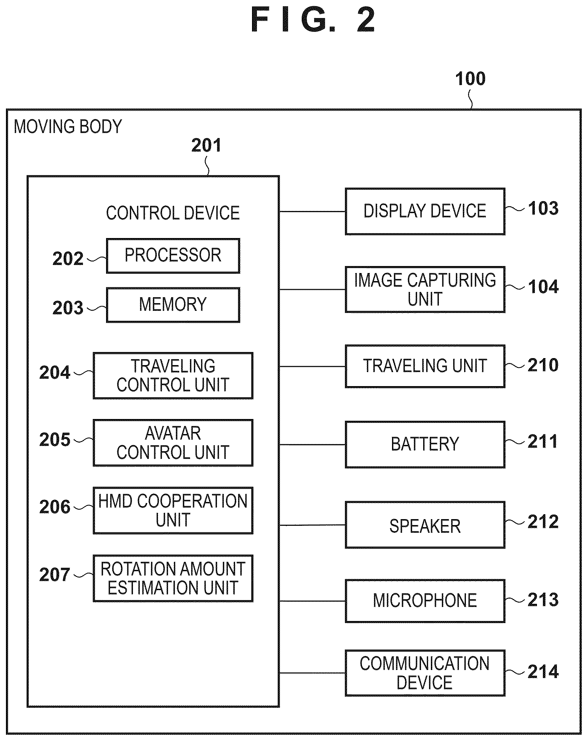

A configuration example of the moving body 100 will be described with reference to FIG. 2. The moving body 100 includes components illustrated in FIG. 2. The moving body 100 may include a component not illustrated in FIG. 2 or may not include some of the components illustrated in FIG. 2.

The control device 201 controls an operation of the moving body 100. The control device 201 includes a processor 202 and a memory 203. The control device 201 including the processor 202 and the memory 203 may be regarded as a computer. The control device 201 may include an electronic control unit (ECU). The processor 202 may include a central processing unit (CPU). The memory 203 may include a combination of a read only memory (ROM) and a random access memory (RAM). The memory 203 stores a program to be executed by the processor 202, data to be used by the processor 202, and the like. The control device 201 may include only one processor 202, or may include a plurality of processors 202 capable of communicating with each other. The same applies to the memory 203.

The processor 202 implements a plurality of functions including a traveling control unit 204, an avatar control unit 205, an HMD cooperation unit 206, and a rotation amount estimation unit 207 by executing the program stored in the memory 203. The traveling control unit 204 controls traveling of the moving body 100. For example, the traveling control unit 204 rotates the moving body 100 in accordance with a rotation request from the HMD 110, and causes the moving body 100 to travel straight in accordance with a straight travel request from the HMD 110. The avatar control unit 205 controls display of the avatar 105 on the display device 103. The HMD cooperation unit 206 cooperates with the HMD 110. For example, the HMD cooperation unit 206 transmits the image captured by the image capturing unit 104 to the HMD 110, and receives the request for the moving body 100 from the HMD 110.

The rotation amount estimation unit 207 estimates the amount of rotation of the moving body 100 with respect to the reference direction. The reference direction may be a fixed direction (for example, true north, or a direction in which the moving body 100 is oriented immediately after activation or at the start of cooperation), or may be a direction in which the moving body 100 is oriented at the time of starting a specific operation (for example, rotation). The rotation amount estimation unit 207 may estimate the amount of rotation of the moving body 100 based on, for example, a measurement value of a sensor (acceleration sensor, gyro sensor, or geomagnetic sensor) mounted on the moving body 100. The expression of the estimation of the amount of rotation results from the fact that the true amount of rotation of the moving body 100 cannot be determined due to a measurement error or the like. The rotation amount estimation unit 207 may estimate the rotating speed of the moving body 100 in addition to the amount of rotation.

A traveling unit 210 drives the moving body 100 to travel. The traveling of the moving body 100 may include straight travel and rotation on the spot. The traveling of the moving body 100 may include backward travel or movement along a curve. The traveling unit 210 includes the wheels 102, a drive source (for example, a motor), and the like. The traveling unit 210 may be a two-wheeled vehicle, a three-wheeled vehicle, a four-wheeled vehicle, or other forms.

A battery 211 supplies operating power to each component of the moving body 100. The battery 211 is, for example, a secondary battery such as a lithium ion battery.

A speaker 212 outputs sound toward a surrounding of the moving body 100. For example, the control device 201 may output a voice of the user 120 received from the HMD 110 from the speaker 212. A microphone 213 acquires sound around the moving body 100. For example, the control device 201 may transmit the sound acquired by the microphone 213 to the HMD 110. A person around the moving body 100 can talk with the user 120 through the speaker 212 and the microphone 213.

A communication device 214 is a device for communicating with another device (for example, the HMD 110) through the network 130. The communication device 214 may perform wired communication, wireless communication, or both. The communication device 214 may include a connector for connecting a cable and a signal processing circuit when performing wired communication. The communication device 214 may include an antenna and the signal processing circuit when performing wireless communication.

### Configuration example of the HMD

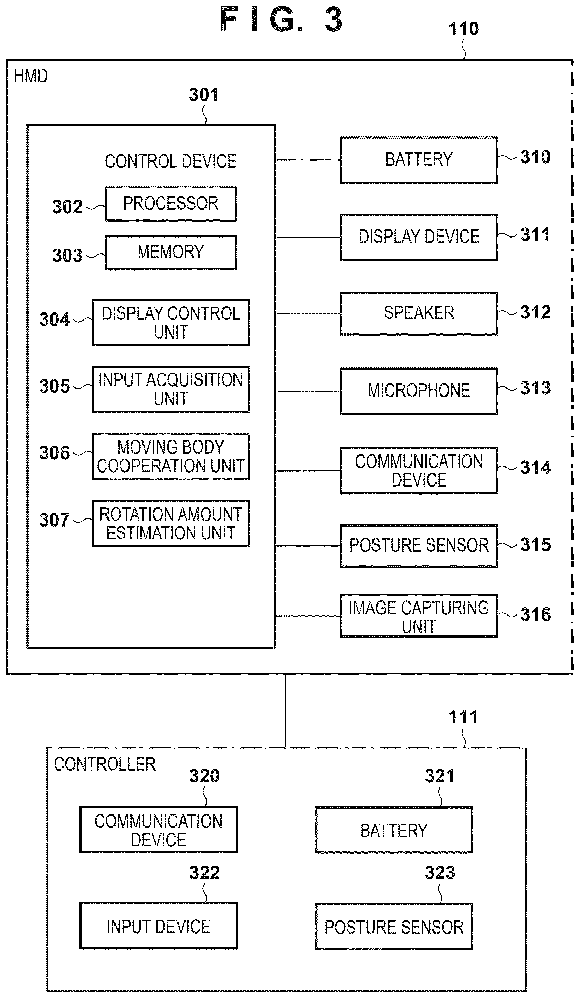

A configuration example of the HMD 110 and the controller 111 will be described with reference to FIG. 3. The HMD 110 and the controller 111 include components illustrated in FIG. 3. The HMD 110 and the controller 111 may include components not illustrated in FIG. 3 or may not include some of the components illustrated in FIG. 3.

A control device 301 controls an operation of the HMD 110. The control device 301 includes a processor 302 and a memory 303. The control device 301 including the processor 302 and the memory 303 may be regarded as a computer. The processor 302 may include a CPU. The memory 303 may include a combination of a RAM and a ROM. The memory 303 stores a program to be executed by the processor 302, data to be used by the processor 302, and the like. The control device 301 may include only one processor 302, or may include a plurality of processors 302 capable of communicating with each other. The same applies to the memory 303.

The processor 302 implements a plurality of functions including a display control unit 304, an input acquisition unit 305, a moving body cooperation unit 306, and a rotation amount estimation unit 307 by executing the program stored in the memory 303. The display control unit 304 controls display on the HMD 110. For example, the display control unit 304 displays a display range that is a part of an image received from the moving body 100 on a display device 311. In addition, the display control unit 304 changes the display range in the image as described later. The input acquisition unit 305 acquires an input performed by the user 120 to the HMD 110 and the controller 111. The input by the user 120 includes a change in the posture of the HMD 110. The moving body cooperation unit 306 cooperates with the moving body 100. For example, the moving body cooperation unit 306 receives data (for example, the image captured by the image capturing unit 104) from the moving body 100, and transmits a request for the moving body 100 to the moving body 100.

The rotation amount estimation unit 307 estimates the amount of rotation of the moving body 100 with respect to the reference direction. The reference direction may be a fixed direction (for example, true north, or a direction in which the moving body 100 is oriented immediately after activation or at the start of cooperation), or may be a direction in which the moving body 100 is oriented at the time of starting a specific operation (for example, rotation). The rotation amount estimation unit 307 may estimate the amount of rotation of the moving body 100 based on, for example, a plurality of images of the moving body environment captured by the image capturing unit 104 mounted on the moving body 100 at different times and time stamps attached to the respective ones of the plurality of images. Details of this processing will be described later. The plurality of images of the moving body environment captured by the image capturing unit 104 at different times are, for example, a plurality of frames constituting a moving image captured by the image capturing unit 104.

A battery 310 supplies operating power to each component of the HMD 110. The battery 310 is, for example, a secondary battery such as a lithium ion battery.

The display device 311 displays an image toward the user 120 wearing the HMD 110. The display device 311 may be a display system, a projection system, or other systems. In the following description, "The control device 301 of the HMD 110 displays an image on the display device 311" may be expressed by "The HMD 110 displays an image".

A speaker 312 outputs sound toward a surrounding of the HMD 110 (in particular, the user 120). For example, the control device 301 may output a voice received from the moving body 100 from the speaker 312. A microphone 313 acquires sound (in particular, the voice of the user 120) around the HMD 110. For example, the control device 301 may transmit the sound acquired by the microphone 313 to the moving body 100. The user 120 can talk with a person around the HMD 110 through the speaker 312 and the microphone 313.

A communication device 314 is a device for communicating with another device (for example, the HMD 110) through the network 130. In addition, the communication device 314 also communicates with the controller 111. The communication device 314 may perform wired communication, wireless communication, or both. The communication device 314 may include a connector for connecting a cable and a signal processing circuit when performing wired communication. The communication device 314 may include an antenna and the signal processing circuit when performing wireless communication.

A posture sensor 315 is a sensor for determining the posture of the HMD 110. The posture sensor 315 may include, for example, an acceleration sensor, a gyro sensor, a geomagnetic sensor, or the like. Instead of or in addition to a measurement value by the posture sensor 315, the control device 301 may determine the posture of the HMD 110 based on a change in a surrounding image captured by an image capturing unit 316. A posture of each component fixed to the HMD 110 changes in accordance with the posture of the HMD 110.

The image capturing unit 316 captures the surrounding of the HMD 110. For example, the image capturing unit 316 may capture the view in front of the HMD 110. The control device 301 may acquire the instruction of the user 120 based on a hand gesture of the user 120 captured by the image capturing unit 316.

Next, components of the controller 111 will be described. A communication device 320 is a device for communicating with the HMD 110. A battery 321 supplies operating power to each component of the controller 111.

An input device 322 is a device for acquiring an input from the user 120. The input device 322 may include, for example, a hardware button, a joystick, or the like. The controller 111 transmits, to the HMD 110, the input by the user 120 to the input device 322.

A posture sensor 323 is a sensor for determining the posture of the HMD 110. The posture sensor 323 may include, for example, an acceleration sensor, a gyro sensor, a geomagnetic sensor, or the like. The controller 111 transmits the posture of the posture sensor 323 to the HMD 110. The control device 301 may identify a position pointed by the user 120 in an image displayed on the display device 311 based on the posture of the controller 111.

The HMD 110 is an example of a display system including the control device 301 and the display device 311 controlled by the control device 301. In the HMD 110, the control device 301 and the display device 311 are mounted on the same device. Alternatively, the control device 301 and the display device 311 may be mounted on separate devices. For example, processing of the control device 301 described below may be executed by a control device included in the controller 111, or may be executed by another device different from the HMD 110 and the controller 111 (for example, an external server).

### Example of changing the display range and avatar

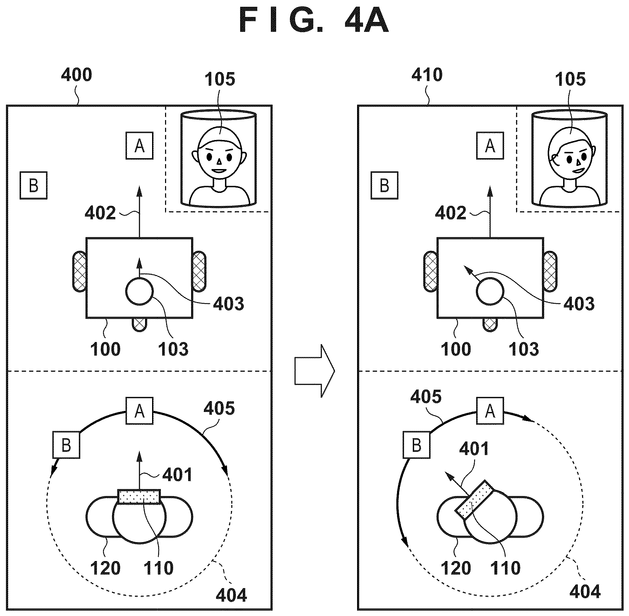

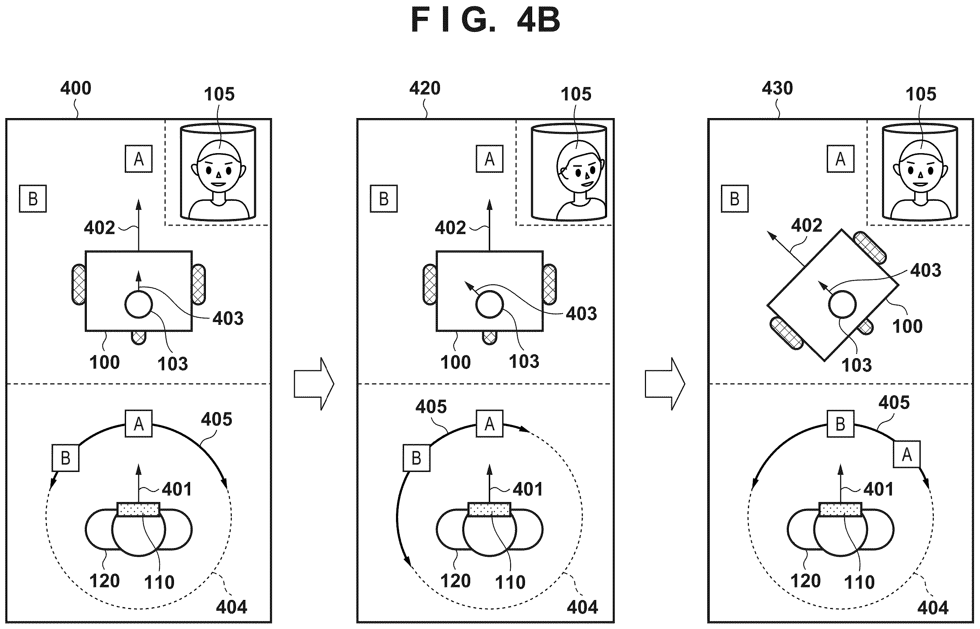

An example of changing the display range of the HMD 110 and an example of changing the avatar 105 based on the operation by the user 120 will be described with reference to FIGS. 4A to 5. Each of situations 400, 410, 420, and 430 in FIGS. 4A and 4B illustrates a state where the moving body 100 and the HMD 110 are viewed from above and a state where the avatar 105 is viewed from the front of the moving body 100 at a specific time point. An arrow 401 indicates the direction of the face of the user 120 with reference to the ground. An arrow 402 indicates a direction of the front of the moving body 100 with reference to the ground. An arrow 403 indicates the direction of the face of the avatar 105 with reference to the ground.

An image 404 refers to the image of the moving body environment captured by the image capturing unit 104 of the moving body 100. The image 404 is transmitted from the moving body 100 to the HMD 110 as described above. In the examples of FIGS. 4A and 4B, the image 404 is an omnidirectional image. In FIGS. 4A and 4B, an intersection line (circle) between the image 404 (omnidirectional image) and the horizontal plane is illustrated. In a case where the HMD 110 receives a moving image from the moving body 100, the image 404 refers to the latest frame at each time point. A display range 405 refers to a portion of the image 404 displayed on the display device 311. The display range 405 is a part of the image 404. The display range 405 is a two-dimensional area. In FIGS. 4A and 4B, an intersection line (arc) between the display range 405 and the horizontal plane is illustrated.

In the situation 400, the user 120 is oriented to the front with respect to the torso. In the following description, the user 120 operates the HMD 110 and the controller 111 without moving the torso (that is, without changing the direction of the torso). The HMD 110 stores a posture of the HMD 110 in a state where the user 120 is oriented to the front as an initial posture. The HMD 110 determines the direction to which the face of the user 120 is oriented based on a change from the initial posture of the HMD 110. In a case where the user 120 is oriented to the front, the HMD 110 requests the moving body 100 such that the face and the torso of the avatar 105 are oriented to the front of the moving body 100. In accordance with this request, the moving body 100 displays the avatar 105 such that the face and the torso of the avatar 105 are oriented to the front of the moving body 100.

In a case where the user 120 is oriented to the front, the HMD 110 determines a position of the display range 405 of the image such that a portion of the moving body environment in front of the moving body 100 is displayed on the display device 311. In the situation 400, assume that an object A exists in front of the moving body 100 (that is, the direction of the arrow 402). In this case, the object A is displayed at the center of the display range 405. In addition, in the situation 400, assume that an object B exists in a direction of 45 degrees to the left of the moving body 100. The object B is displayed on the left side in the display range 405.

An example of an operation in which the user 120 changes a portion of the moving body environment displayed on the display device 311 by changing the posture of the HMD 110 will be described with reference to FIG. 4A. In the following description, the portion of the moving body environment displayed on the display device 311 is referred to as a display portion of the moving body environment. Assume that the user 120 rotates his/her face 45 degrees in the left direction (counterclockwise when viewed from above) to view the object B from the front. The situation 410 illustrates a state where the moving body 100 and the HMD 110 are viewed from above after the user 120 rotates the direction of his/her face in the left direction by 45 degrees. The HMD 110 detects a change in the direction of the face of the user 120 based on the change in the posture of the HMD 110 measured by the posture sensor 315. In response to the change in the direction of the face of the user 120, the HMD 110 moves the display range 405 in the image 404 in the left direction. As a result, the object A moves to the right side in the display range 405, and the object B moves to the center of the display range 405.

Based on the fact that the user 120 has rotated the direction of his/her face leftward by 45 degrees from the front, the HMD 110 requests the moving body 100 to rotate the direction of the face of the avatar 105 leftward by 45 degrees. In accordance with this request, the moving body 100 changes the display of the avatar 105 such that the face of the avatar 105 is oriented to the direction of 45 degrees to the left of the moving body 100 from the front.

In an operation of the situation 410, the torso of the user 120 remains oriented to the front. For this reason, the HMD 110 does not request a change in the direction of the torso of the avatar 105 when requesting the change in the direction of the face of the avatar 105. Therefore, the moving body 100 maintains the direction of the torso of the avatar 105 at the front of the moving body 100.

In the example of FIG. 4A, the user 120 changes the direction of the face from the front to the left. Also in a case where the user 120 changes the direction of the face to another direction (for example, right, downward, and upward directions), the HMD 110 moves the display range 405 in response to the change in the direction of the face of the user 120, and the moving body 100 changes the direction of the face of the avatar 105 in response to the change in the direction of the face of the user 120. As illustrated in the situation 410, the direction of the moving body 100 is not changed in a case where the user 120 changes the direction of the face.

An example of an operation in which the user 120 changes the display portion of the moving body environment by a method different from the method of changing the posture of the HMD 110 will be described with reference to FIG. 4B. For example, the user 120 may instruct the HMD 110 to change the display portion of the moving body environment using the input device 322 (for example, a joystick) of the controller 111. Additionally or alternatively, in a case where the HMD 110 can recognize a hand gesture, the user 120 may instruct the HMD 110 to change the display portion of the moving body environment by using the hand gesture. In such an instruction method, the user 120 does not need to change the posture of the HMD 110.

Assume that the user 120 instructs the HMD 110 to rotate the display portion of the moving body environment 45 degrees in the left direction such that the object B is displayed at the center of the display device 311. As illustrated in the situation 420, the HMD 110 moves the display range 405 of the image 404 45 degrees in the left direction in response to the instruction of the user 120. As a result, a portion rotated 45 degrees in the left direction from the portion of the moving body environment displayed in the situation 400 is displayed on the display device 311. In the image displayed on the display device 311, the object A is located on the right side, and the object B is located at the center.

Since the face of the user 120 is oriented to the object B, the HMD 110 requests the moving body 100 to turn the face of the avatar 105 to the object B. In addition, since the face of the user 120 remains oriented to the front of the torso, the HMD 110 requests the moving body 100 to turn the torso of the avatar 105 to the object B together with the face of the avatar 105. In response to this request, the moving body 100 changes the display of the avatar 105 such that the face and the torso of the avatar 105 are oriented to the object B (that is, such that the face and the torso of the avatar 105 rotate 45 degrees in the left direction from the state of the situation 400). As a result, the object located in front of the user 120 in the HMD 110 (the object B in the situation 420) coincides with the object located in front of the face of the avatar 105 (the object B in the situation 420).

According to the above operation, the user 120 can change the display portion of the moving body environment without changing the posture of the HMD 110. As a result, the user 120 can easily visually recognize a display portion that is difficult to check by changing the face orientation (for example, a portion behind the moving body 100). Furthermore, since the face of the avatar 105 is oriented to the portion of the moving body environment viewed by the user 120, the person around the moving body 100 can correctly recognize the direction viewed by the user 120.

In the situation 420, since the direction of the torso of the user 120 does not coincide with the front of the moving body 100, the user 120 feels as if the moving body 100 were traveling obliquely if the user 120 instructs the moving body 100 to travel straight in this state. Specifically, although the user 120 views the object B in front, the moving body 100 travels straight toward the object A. For this reason, the HMD 110 may request the moving body 100 to turn to the portion of the moving body environment displayed at the center of the display range 405.

As illustrated in the situation 430, the moving body 100 rotates so as to be oriented to the object B in response to the request from the HMD 110 (that is, the moving body 100 rotates 45 degrees in the left direction). When the moving body 100 rotates, both the image capturing unit 104 mounted on the moving body 100 and the image 404 captured by the image capturing unit 104 also rotate. Then, the HMD 110 moves the display range 405 of the image such that the object B continues to be displayed at the center (specifically, the HMD 110 rotates the display range 405 by 45 degrees in the right direction).

In addition, when the moving body 100 rotates, both the display device 103 mounted on the moving body 100 and the avatar 105 displayed on the display device 103 also rotate. Then, the moving body 100 changes the display of the avatar 105 such that the face and the torso of the avatar 105 continue to be oriented to the object B (specifically, the moving body 100 rotates the direction of the face and the torso of the avatar 105 rightward by 45 degrees).

According to the above operation, even when the moving body 100 rotates, the display portion of the moving body environment displayed on the HMD 110 does not change, thus reducing discomfort felt by the user 120. In addition, even when the moving body 100 rotates, the direction of the face and the torso of the avatar 105 does not change, thus reducing discomfort felt by the person around the moving body 100.

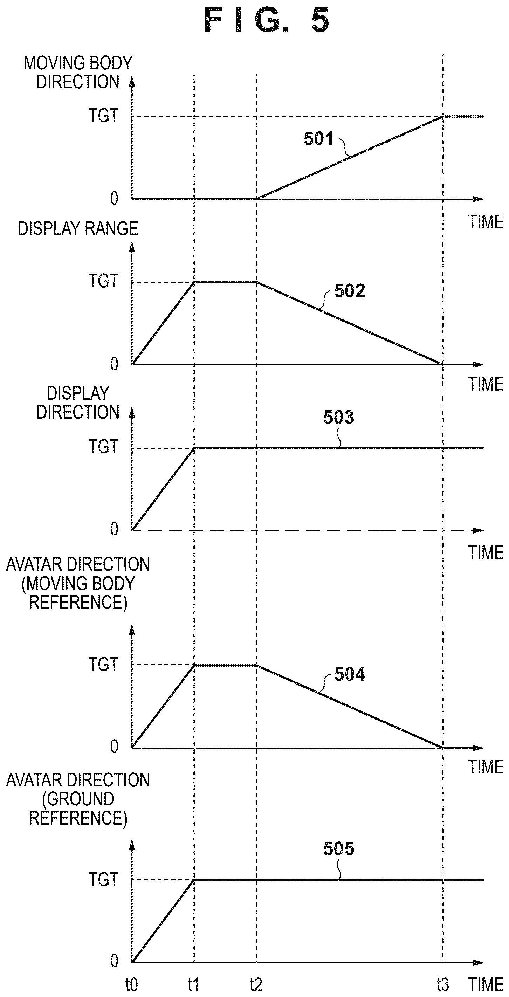

Referring to FIG. 5, each of horizontal axes of graphs 501 to 505 illustrating the change in the position of the display range 405 and the change in the direction of the face of the avatar 105 when a transition occurs from the situation 400 to the situation 430 in FIG. 4B represents time. A vertical axis of the graph 501 represents the direction of the front of the moving body 100 with reference to the ground. A vertical axis of the graph 502 represents the position of the display range 405 in the image 404. A vertical axis of the graph 503 represents the direction of the moving body environment displayed at the center of the display device 103 of the HMD 110. A vertical axis of the graph 504 represents the direction of the face of the avatar 105 with reference to the moving body 100. A vertical axis of the graph 505 represents the direction of the face of the avatar 105 with reference to the ground. Each of the vertical axes of the graphs 501 to 505 represents the amount of rotation, which is 0 at a position at time t0 and positive in leftward rotation (counterclockwise when viewed from above).

At the time t0, assume that the HMD 110 receives an instruction to rotate the display portion of the moving body environment by a target amount TGT in the left direction from the user 120. In response to this instruction, the HMD 110 moves the display range 405 in the image 404 by the target amount TGT in the left direction. In addition, in response to this instruction, the HMD 110 requests the moving body 100 to rotate the direction of the face and the torso of the avatar 105 by the target amount TGT in the left direction. In response to this request, the moving body 100 changes the display of the avatar 105 so as to rotate the direction of the face and the torso of the avatar 105 by the target amount TGT in the left direction. From time t0 to t1, the moving body 100 causes the direction of the face and the torso of the avatar 105 to be oriented to a portion of the moving body environment displayed at the center of the display range 405.

At time t1, assume that the display range 405 has moved by the target amount TGT. At the same time, the direction of the face and the torso of the avatar 105 also has moved by the target amount TGT. A moving speed of the display range 405 may be a preset speed or a speed instructed by the user 120. The moving speed of the display range 405 may be higher than the speed at which the moving body 100 can rotate.

At time t2, the HMD 110 requests the moving body 100 to rotate by the target amount TGT in the left direction. The HMD 110 may make this request in response to the instruction from the user 120. Alternatively, the HMD 110 may make this request in response to the elapse of a predetermined time from the end of the movement of the display range 405. The moving body 100 starts its rotation in response to this request.

While the moving body 100 is rotating, the HMD 110 moves the display range 405 in the right direction at the same speed as the rotating speed of the moving body 100. As a result, as illustrated in the graph 503, the direction of the moving body environment displayed at the center of the display device 311 of the HMD 110 is maintained. In addition, while the moving body 100 is rotating, the moving body 100 rotates the direction of the face and the torso of the avatar 105 in the right direction at the same speed as the rotating speed of the moving body 100. As a result, as illustrated in the graph 505, the direction of the face and the torso of the avatar 105 with reference to the ground is maintained.

At time t3, assume that the moving body 100 has rotated by the target amount TGT. In response to this, the HMD 110 finishes the movement of the display range 405, and finishes the change in the direction of the face and the torso of the avatar 105.

In the example of FIG. 5, the amount of rotation of the moving body 100, the amount of rotation of the display range 405, and the amount of rotation of the face of the avatar 105 are linearly changed. Alternatively, these amounts of rotation may be changed in a curved manner.

In the example of FIG. 5, the moving body 100 starts rotating after the display range 405 has moved by the target amount TGT. Alternatively, the moving body 100 may start rotating before the display range 405 finishes its movement by the target amount TGT. For example, after the display range 405 starts moving, the moving body 100 may start rotating in response to the instruction from the user 120 or in response to the elapse of a predetermined time. Alternatively, the moving body 100 may start rotating at the same time when the display range 405 starts moving. When the moving body 100 starts rotating while the display range 405 is moving toward the target value TGT, the direction of the moving body environment displayed at the center of the display device 103 of the HMD 110 rotates much due to the amount of rotation of the moving body 100. For this reason, the HMD 110 may finish its rotation in the left direction in response to the direction of the moving body environment displayed at the center of the display device 103 of the HMD 110 being rotated by the target value TGT, and then start rotating in the right direction such that the direction of the moving body environment is constant. The same applies to the rotation of the direction of the face and the torso of the avatar.

### Example of a method of estimating the amount of rotation of the moving body

As described above, the HMD 110 moves the display range 405 in synchronization with the rotation of the moving body 100. If the direction in which the moving body 100 is oriented cannot be accurately determined during the rotation of the moving body 100, the scenery displayed on the display device 311 may be blurred, or the movement of the scenery may become awkward. Therefore, the HMD 110 according to some embodiments executes the following processing in order to accurately estimate the amount of rotation of the moving body 100 with respect to the reference direction.

Assume that the HMD 110 has acquired n (n is an integer of 2 or more) images from the moving body 100 up to the present time. Each of the n images is time-stamped by the moving body 100. The time stamp attached to the image typically represents the time when the moving body environment is captured by the image capturing unit 104. Alternatively, the time stamp attached to the image may represent the time at which the image is processed by the moving body 100, or may represent the time at which the moving body 100 transmits the image to the HMD 110.

The times represented by the time stamps attached to the n images are denoted as t₁ to tₙ. t₁ is the most past time, and the time advances as the subscript increases. An image with a time stamp at time tᵢ (i = 1,..., n) is denoted as an image Iᵢ. The intervals between the times t₁ to tₙ are ideally the frame rate of a moving image captured by the image capturing unit 104. However, the image transmitted from the moving body 100 to the HMD 110 may be lost on the way. For this reason, the intervals between the times t₁ to tₙ are not necessarily equal.

An estimated value of the amount of rotation of the moving body 100 at the time tᵢ is denoted as θᵢ. The HMD 110 estimates the probability distribution of the estimated value θᵢ. The HMD 110 sets the value of the random variable having the maximum probability in the determined probability distribution as the estimated value θᵢ.

First, various parameters used to determine the estimated value θₙ will be described. The HMD 110 determines the amount of rotation oᵢ of the moving body 100 based on the image Iᵢ. The amount of rotation oᵢ corresponds to a measurement value in the Kalman filter. For example, the HMD 110 determines the amount of rotation oᵢ with respect to the reference direction based on the optical flow between the image I₁ and the image Iᵢ. In this example, the direction in which the moving body 100 is oriented at the time t₁ is the reference direction.

Assume that the amount of rotation oᵢ has an error (noise) given by the following normal distribution $N \left(0, {σ}_{{o}_{i}}^{2}\right)$ with respect to the true amount of rotation of the moving body 100. The HMD 110 determines the variance of the normal distribution based on the estimation accuracy of the amount of rotation oₙ. For example, the HMD 110 determines the variance of the normal distribution so as to be inversely proportional to the square of the number of matching points in the optical flow between the image Iₙ and the image I₁.

Furthermore, the HMD 110 estimates the rotating speed of the moving body 100 at the time tᵢ. The rotating speed of the moving body corresponds to an operation value (odometry) in the Kalman filter. In the following description, the HMD 110 estimates the rotating speed by two methods.

Specifically, the HMD 110 estimates the rotating speed uᵢ of the moving body 100 at the time tᵢ based on the comparison between the image Iᵢ and an image Iᵢ₋₁. For example, the HMD 110 estimates the amount of rotation of the moving body 100 from the time tᵢ₋₁ to tᵢ based on the optical flow between the image Iᵢ and the image Iᵢ₋₁, and estimates the rotating speed uᵢ by dividing the amount of rotation by the time difference between the time tᵢ₋₁ and the time tᵢ.

Assume that the rotating speed uᵢ has an error (noise) given by the following normal distribution $N \left(0, {σ}_{{u}_{i}}^{2}\right)$ with respect to the true rotating speed of the moving body 100. The HMD 110 determines the variance of the normal distribution based on the estimation accuracy of the rotating speed uᵢ. For example, the HMD 110 determines the variance of the normal distribution so as to be inversely proportional to the square of the number of matching points in the optical flow between the image Iᵢ and the image Iᵢ₋₁.

Furthermore, the HMD 110 estimates the rotating speed vᵢ of the moving body 100 at the time tᵢ based on the profile of the rotating speed of the moving body 100 determined in advance. This profile represents the rotating speed of the moving body 100 at each time point after the HMD 110 instructs the moving body 100 to rotate by a predetermined amount. The profile is determined by a preliminary test and stored in the control device 301 of the HMD 110.

Assume that the rotating speed vᵢ has an error (noise) given by the following normal distribution $N \left(0, {σ}_{{v}_{i}}^{2}\right)$ with respect to the true rotating speed of the moving body 100. The HMD 110 may use a fixed value determined by a preliminary experiment or the like as the variance of the normal distribution.

The HMD 110 estimates the probability distribution p(θₙ|u₁: ₙ, v_{1: n}, o_{1: n}) of the estimated value θₙ on the premise of the rotating speeds u₁ to uₙ, the rotating speeds v₁ to vₙ, and the amounts of rotation v₁ to vₙ. Here, u_{1: n} represents u₁, u₂,..., uₙ. The same applies to v and o.

The probability distribution p(θₙ|u_{1: n}, v_{1: n}, o_{1: n}) is given by [Formula 1] $\begin{matrix}p \left(\left.{θ}_{n}\right|{u}_{1 : n},{v}_{1 : n},{o}_{1 : n}\right) \\ = ηp \left(\left.{o}_{n}\right|{θ}_{n}\right) {\int }_{- ∞}^{∞} p \left(\left.{θ}_{n}\right|{θ}_{n - 1},{u}_{n},{v}_{n}\right) p \left(\left.{θ}_{n - 1}\right|{u}_{1 : n - 1},{v}_{1 : n - 1},{o}_{1 : n - 1}\right) {dθ}_{n - 1} .\end{matrix}$ η in Formula 1 is a normalization constant. p(θₙ₋₁|u_{1: n-1}, v_{1: n-1}, o_{1: n-1}) in Formula 1 represents an estimated value of the amount of rotation of the moving body 100 at the time tₙ₋₁.

The probability distribution p(oₙ|θₙ) in Formula 1 is given by [Formula 2] $p \left(\left.{o}_{n}\right|{θ}_{n}\right) = N \left({o}_{n}, {σ}_{{o}_{n}}^{2}\right) .$

The probability distribution p(θₙ|θₙ₋₁, uₙ, vₙ) in Formula 1 is given by [Formula 3] $p \left(\left.{θ}_{n}\right|{θ}_{n - 1},{u}_{n},{v}_{n}\right) = N \left({θ}_{n - 1}+{μ}_{{odom}_{n}},{σ}_{{odom}_{n}}^{2}\right)$ (here, ${μ}_{{odom}_{n}} = \frac{{u}_{n} {σ}_{{v}_{n}}^{2} + {v}_{n} {σ}_{{u}_{n}}^{2}}{{σ}_{{u}_{n}}^{2} + {σ}_{{v}_{n}}^{2}} Δ t , {σ}_{{odom}_{n}}^{2} = \frac{{σ}_{{u}_{n}}^{2} {σ}_{{v}_{n}}^{2} Δ {t}^{2}}{{σ}_{{u}_{n}}^{2} + {σ}_{{v}_{n}}^{2}}$). Δt in Formula 3 is the time difference between the time tᵢ₋₁ and the time tᵢ.

The HMD 110 estimates the amount of rotation of the moving body 100 by the method described above every time a new image is acquired from the moving body 100. As described above, the HMD 110 estimates the estimated value θₙ of the amount of rotation of the moving body 100 based on the plurality of images I₁ to Iₙ and the time stamps attached to the respective images. The image transmitted from the moving body 100 to the HMD 110 may be lost on the way. Therefore, by estimating the amount of rotation of the moving body 100 based on the time stamp attached by the moving body 100, the HMD 110 can accurately estimate the amount of rotation of the moving body 100. This improves the convenience of the user 120.

Specifically, as represented by Formulas 1 to 3 described above, the HMD 110 determines the estimated value θₙ of the amount of rotation of the moving body 100 at the time tₙ based on the amount of rotation oₙ determined based on the image Iₙ, the estimated value θₙ₋₁ of the amount of rotation of the moving body 100 determined for the time tₙ₋₁, the time difference Δt (that is, the time difference between the time tₙ and the time tₙ₋₁), and the rotating speed (uₙ and vₙ) of the moving body 100.

In the example described above, the HMD 110 estimates the rotating speeds uᵢ and vᵢ by two methods, and estimates the amount of rotation θₙ based on the rotating speeds uᵢ and vᵢ. Alternatively, the HMD 110 may estimate the amount of rotation θₙ based on the rotating speed uᵢ by estimating the rotating speed uᵢ but not estimating the rotating speed vᵢ. Alternatively, the HMD 110 may estimate the amount of rotation θₙ based on the rotating speed vᵢ by estimating the rotating speed vᵢ but not estimating the rotating speed uᵢ.

The HMD 110 may acquire the amount of rotation and the rotating speed of the moving body 100 estimated by the moving body 100 from the moving body 100. The HMD 110 may further estimate the amount of rotation θₙ based on the amount of rotation and the rotating speed.

For example, assume that the HMD 110 acquires the amount of rotation wⱼ and the rotating speed qⱼ of the moving body 100 estimated for the time tⱼ (j < n) by the moving body 100 when estimating the amount of rotation θₙ at the time tₙ. Generally, since it takes time to estimate the amount of rotation wⱼ and the rotating speed qⱼ, the moving body 100 transmits the amount of rotation wⱼ and the rotating speed qⱼ to the HMD 110 after transmitting the image Iⱼ to the HMD 110.

Assume that the amount of rotation wⱼ has an error (noise) given by the following normal distribution $N \left(0, {σ}_{{w}_{j}}^{2}\right)$ with respect to the true amount of rotation of the moving body 100. In addition, assume that the amount of rotation qⱼ has an error (noise) given by the following normal distribution $N \left(0, {σ}_{{q}_{j}}^{2}\right)$ with respect to the true rotating speed of the moving body 100. The HMD 110 may acquire variances of these normal distributions from the moving body 100. Alternatively, the HMD 110 may use the variances of these normal distributions stored in the HMD 110 in advance.

The HMD 110 estimates the amount of rotation θⱼ at the time tⱼ by replacing the respective values of Formulas 2 and 3 with the following values. ${μ}_{{odom}_{j}} ← \frac{{μ}_{{odom}_{j}} {σ}_{{w}_{j}}^{2} Δ {t}^{2} + {w}_{j} Δ {tσ}_{{odom}_{j}}^{2}}{{σ}_{{odom}_{j}}^{2} + {σ}_{{w}_{j}}^{2} Δ {t}^{2}}$ ${σ}_{{odom}_{j}}^{2} ← \frac{{σ}_{{odom}_{j}}^{2} {σ}_{{w}_{j}}^{2} Δ {t}^{2}}{{σ}_{{odom}_{j}}^{2} + {σ}_{{w}_{j}}^{2} Δ {t}^{2}}$ ${o}_{j} ← \frac{{o}_{j} {σ}_{{q}_{j}}^{2} + {q}_{j} {σ}_{{o}_{j}}^{2}}{{σ}_{{q}_{j}}^{2} + {σ}_{{o}_{j}}^{2}}$ ${σ}_{{o}_{j}}^{2} ← \frac{{σ}_{{o}_{j}}^{2} {σ}_{{q}_{j}}^{2}}{{σ}_{{o}_{j}}^{2} + {σ}_{{q}_{j}}^{2}}$

Thereafter, the HMD 110 sequentially estimates the amount of rotation θⱼ₊₁ to the amount of rotation θₙ at the times tⱼ₊₁ to tₙ in accordance with Formulas 1 to 3. In this manner, the HMD 110 can further accurately estimate the amount of rotation θⱼ based on the amount of rotation and the rotating speed estimated by the moving body 100.

### Operation example of the HMD 110

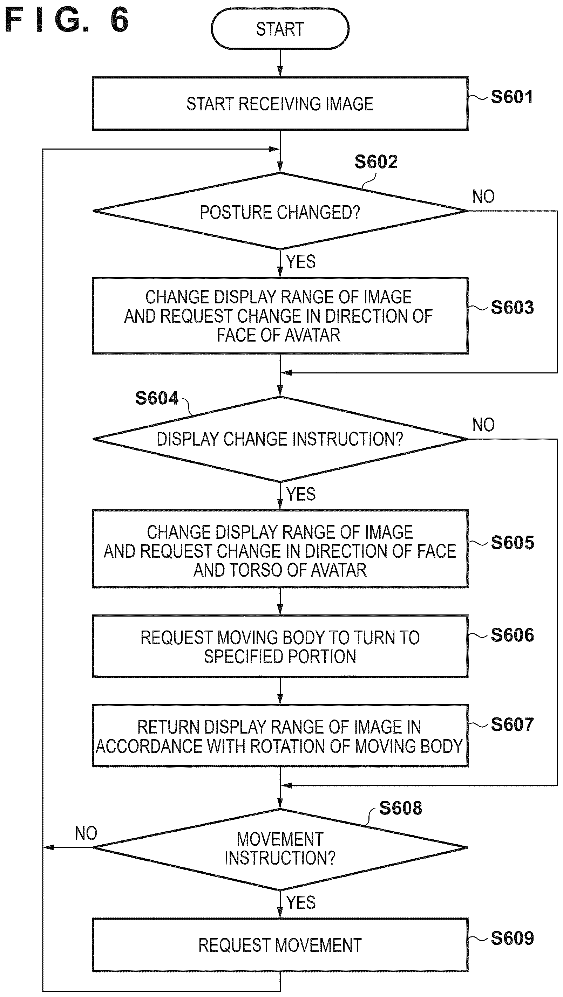

An example of a method in which the control device 301 controls the HMD 110 to operate the HMD 110 as described above will be described with reference to FIG. 6. Each step in FIG. 6 may be performed by the processor 302 executing the program stored in the memory 303. Alternatively, at least some steps in the method of FIG. 6 may be performed by a dedicated integrated circuit such as an application specific integrated circuit (ASIC). The method of FIG. 6 is started, for example, in response to the start of cooperation between the moving body 100 and the HMD 110. The method of FIG. 6 ends, for example, in response to the end of cooperation between the moving body 100 and the HMD 110. Assume that the user 120 wears the HMD 110 on the head at the start of the method of FIG. 6.

In S601, the control device 301 starts acquiring (receiving) the image 404 of the moving body environment captured by the image capturing unit 104 of the moving body 100. As described above, a time stamp is attached to the image 404. In a case where the image capturing unit 104 captures a moving image, the control device 301 receives a new frame from the moving body 100 every time it is generated. The control device 301 displays the display range 405 that is a part of the acquired image 404 on the display device 311. At this point, the control device 301 determines the display range 405 of the image such that the portion of the moving body environment in front of the moving body 100 is displayed on the display device 311. The operation of S601 corresponds to the operation of the situation 400 in FIGS. 4A and 4B.

The control device 301 may start acquiring (receiving) the amount of rotation and the rotating speed of the moving body 100 estimated by the moving body 100. Every time the control device 301 acquires the image 404 from the moving body 100, the control device 301 displays the display range 405 of the newly acquired image 404 on the display device 311. That is, the control device 301 sequentially displays a plurality of images acquired from the moving body 100 on the display device 311. In addition, the control device 301 estimates the amount of rotation θₙ of the moving body 100 as described above every time the image 404 is acquired from the moving body 100.

In S602, the control device 301 determines whether the posture of the HMD 110 has been changed. When it is determined that the posture of the HMD 110 has been changed ("YES" in S602), the control device 301 shifts the processing to S603, and otherwise ("NO" in S602), the control device 301 shifts the processing to S604. The change in the posture of the HMD 110 may be detected by the measurement value by the posture sensor 315.

In S603, the control device 301 moves the display range 405 of the image 404 in response to the change in the posture of the HMD 110. Specifically, the control device 301 moves the display range 405 of the image 404 in accordance with a change direction and a change amount (for example, a change angle) of the posture of the HMD 110. The change direction of the posture of the HMD 110 may be any of the upward direction, the downward direction, the left direction, the right direction, or a direction therebetween. In addition, the control device 301 requests the moving body 100 to change the direction of the face of the avatar 105 when moving the display range 405 of the image 404 in response to the change in the posture of the HMD 110. The control device 301 may include a change direction and a change amount (change angle) of the face of the avatar 105 in this request. In this step, the control device 301 does not request changing the direction of the torso of the avatar 105. The operation of S603 corresponds to the operation of the situation 410 in FIG. 4A.

In step S604, the control device 301 determines whether the instruction to change the portion of the moving body environment displayed on the display device 311 has been acquired from the user 120 by a method different from the change in the posture of the display device. The instruction to change the portion of the moving body environment displayed on the display device 311 is referred to as a change instruction. In addition, a portion of the moving body environment specified to be displayed on the display device 311 is referred to as a specified portion. When it is determined that the change instruction has been acquired by a method different from the change in the posture of the display device ("YES" in S604), the control device 301 shifts the processing to S605, and otherwise ("NO" in S604), the control device 301 shifts the processing to S608.

The change instruction may include the change direction and the change amount (for example, the change angle) for displaying the specified portion of the moving body environment on display device 311. The change instruction is an instruction to display, on the display device 311, a specified portion different from the current display portion on the display device 311. The change instruction may be issued by an operation of the controller 111 on the input device 322 (for example, a direction and an amount, or time of tilting of the joystick), a hand gesture (for example, a direction and an amount, or time of hand movement), a change in the posture of the controller 111, specifying a position in the display range 405 of the image 404 (the specified position comes to the center of the specified portion), or the like. The direction specified by the change instruction may be a direction in which the moving body 100 can rotate. For example, in a case where the moving body 100 can rotate in the left direction and the right direction, the direction specified by the change instruction may be either the left direction or the right direction.

In step S605, in response to the acquisition of the change instruction, the control device 301 moves the display range 405 of the image 404 by a specified amount in a direction specified by the change instruction such that the specified portion of the moving body environment is displayed on the display device 311.

In addition, the control device 301 requests the moving body 100 to change the direction of the face and the torso of the avatar 105 when moving the display range 405 of the image 404. The control device 301 may include the change direction and the change amount (change angle) of the face and the torso of the avatar 105 in this request. The operation of S605 corresponds to the operation of the situation 420 in FIG. 4B.

In S606, the control device 301 requests the moving body 100 to turn to the specified portion of the moving body environment. In response to this request, the moving body 100 rotates so as to be oriented to the specified portion of the moving body environment. This request may be made after the specified portion of the moving body environment is displayed on the display device 311. Alternatively, this request may be made before the specified portion of the moving body environment is displayed on the display device 311 (for example, while the display range 405 is moving or at the start of the movement of the display range 405).

In S607, the control device 301 moves the display range 405 of the image 404 so as to return to the position before the movement in S605 while the moving body 100 is rotating so as to be oriented to the specified portion. Specifically, in this movement, the display range 405 is moved in the opposite direction to the direction specified by the change instruction. After the specified portion of the moving body environment is displayed on the display device 311, the control device 301 may move the display range 405 of the image 404 such that the specified portion of the moving body continues to be displayed on the display device 311 while the moving body 100 is rotating so as to be oriented to the specified portion. The operation of S607 corresponds to the operation of the situation 430 in FIG. 4B.

In S608, the control device 301 determines whether an instruction to move the moving body 100 has been acquired from the user 120. The instruction to move the moving body 100 is referred to as a movement instruction. When it is determined that the movement instruction has been acquired ("YES" in S608), the control device 301 shifts the processing to S609, and otherwise ("NO" in S608), the control device 301 shifts the processing to S602.

The movement instruction may include a movement direction and a movement amount of the moving body 100. The movement instruction may be issued by the operation of the controller 111 on the input device 322 (for example, a direction and an amount, or time of tilting of the joystick), a hand gesture (for example, a direction and an amount, or time of hand movement), a change in the posture of the controller 111, specifying the position in the display range 405 of the image 404 (the moving body 100 is moved to the specified position), or the like. The direction specified by the movement instruction may be a direction in which the moving body 100 can move. For example, in a case where the moving body 100 is movable along the ground, the direction specified by the movement instruction may be any direction in the horizontal plane.

In S609, the control device 301 requests the moving body 100 to move to a specified position. In this step, the control device 301 does not move the display range 405 of the image 404. In addition, the control device 301 does not request changing the direction of the face and the torso of the avatar 105 to the moving body 100.

### Operation example of the moving body 100

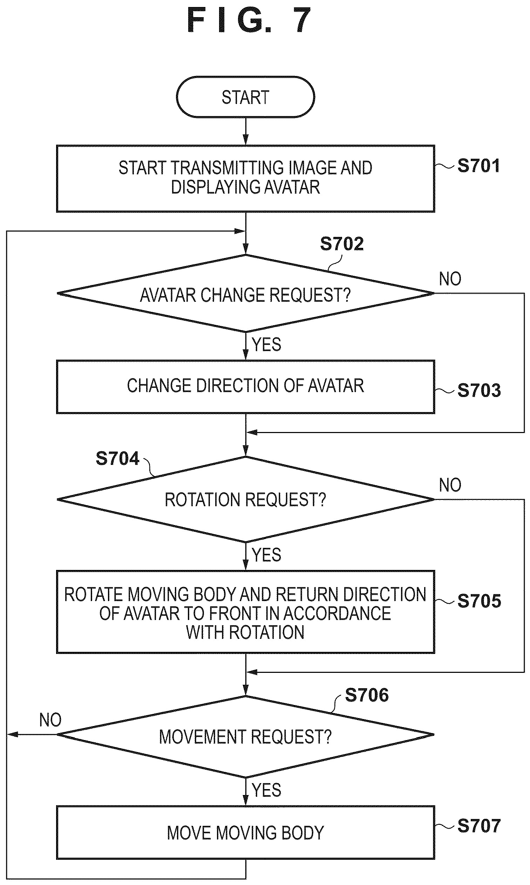

An example of a method in which the control device 201 controls the moving body 100 to operate the moving body 100 as described above will be described with reference to FIG. 7. Each step in FIG. 7 may be performed by the processor 202 executing the program stored in the memory 203. Alternatively, at least some steps in the method of FIG. 7 may be performed by a dedicated integrated circuit such as an ASIC. The method of FIG. 7 is started, for example, in response to the start of cooperation between the moving body 100 and the HMD 110. The method of FIG. 7 ends, for example, in response to the end of cooperation between the moving body 100 and the HMD 110. In the method of FIG. 7, the change in the direction of the face or the torso of the avatar 105 refers to a change with reference to the moving body 100.

In S701, the control device 201 starts transmitting the image 404 of the moving body environment of the moving body 100 captured by the image capturing unit 104 to the HMD 110. In a case where the image capturing unit 104 captures a moving image, the control device 201 transmits a new frame to the HMD 110 every time it is captured. In addition, the control device 201 starts displaying the avatar 105. At this point, the control device 201 displays the avatar 105 such that the face and the torso of the avatar 105 are oriented to the front of the moving body 100. The operation of S701 corresponds to the operation of the situation 400 in FIGS. 4A and 4B. The control device 201 may start estimating the amount of rotation and the rotating speed of the moving body 100 and transmitting them to the HMD 110.

In S702, the control device 201 determines whether a request to change the avatar 105 has been acquired from the HMD 110. The request to change the avatar 105 is referred to as an avatar change request. When it is determined that the avatar change request has been acquired ("YES" in S702), the control device 201 shifts the processing to S703, and otherwise ("NO" in S702), the control device 201 shifts the processing to S704. The avatar change request may be a request to change the direction of the face of the avatar 105 (request in S603 in FIG. 6). This request does not request changing the direction of the torso of the avatar 105. Alternatively, the avatar change request may be a request to change the direction of the face and the torso of the avatar 105 (request in S605 in FIG. 6).

In S703, the control device 201 changes the avatar 105 displayed on the display device 103. Specifically, the control device 201 rotates the direction of the face of the avatar 105 in the direction specified in the avatar change request such that the face of the avatar 105 is oriented to a portion different from a portion of the moving body environment to which the face of the avatar 105 is currently oriented. In a case where the avatar change request also requests the change in the direction of the torso of the avatar 105, the control device 201 rotates the torso of the avatar 105 so as to be oriented to the same direction as the face of the avatar 105. This operation corresponds to the operation of the situation 420 in FIG. 4B. In a case where the avatar change request does not request the change in the direction of the torso of the avatar 105, the control device 201 maintains the direction of the torso of the avatar 105 in front of the moving body 100. This operation corresponds to the operation of the situation 410 in FIG. 4A.

In S704, the control device 201 determines whether a request to rotate the moving body 100 has been acquired from the HMD 110. The request to rotate the moving body 100 is referred to as a rotation request. When it is determined that the rotation request has been acquired ("YES" in S704), the control device 201 shifts the processing to S705, and otherwise ("NO" in S704), the control device 201 shifts the processing to S706.

In S705, the control device 201 rotates the moving body 100 in response to the rotation request. The rotation request may be the request in S603 of FIG. 6. That is, the rotation request may be a request to rotate the moving body 100 so as to be oriented to a portion of the moving body environment specified by the avatar change request. In this case, the control device 201 rotates the moving body 100 so as to be oriented to the specified portion of the moving body environment.

In a case where the face and the torso of the avatar 105 are not oriented to the front of the moving body 100 at the start of S705, the control device 201 may rotate the direction of the face and the torso of the avatar 105 so as to return the face and the torso of the avatar 105 to the front of the moving body 100. In this case, the control device 201 rotates the face and the torso of the avatar 105 in the direction opposite to the rotation direction of S703 while the moving body 100 is rotating so as to be oriented to the specified portion. In addition, the control device 201 may rotate the face and the torso of the avatar 105 such that the face and the torso of the avatar 105 continue to be oriented to the specified portion while the moving body 100 is rotating so as to be oriented to the specified portion after the face and the torso of the avatar 105 are turned to the specified portion. Furthermore, the control device 201 may rotate the moving body 100 so as to be oriented to the specified portion after the face of the avatar 105 is turned to the specified portion. The operation of S705 corresponds to the operation of the situation 430 in FIG. 4B.

In S706, the control device 201 determines whether a request to move the moving body 100 has been acquired from the HMD 110. The request to move the moving body 100 is referred to as a movement request. When it is determined that the movement request has been acquired ("YES" in S706), the control device 201 shifts the processing to S707, and otherwise ("NO" in S706), the control device 201 shifts the processing to S702. The movement request may include a movement direction and a movement distance of the moving body 100.

In S707, the control device 201 moves the moving body 100 in response to the movement request. In a case where the movement direction specified by the movement request is in front of the moving body 100, the control device 201 causes the moving body 100 to travel straight by the specified movement distance. In a case where the movement direction specified by the movement request is not in front of the moving body 100, the control device 201 causes the moving body 100 to travel straight by the specified movement distance after rotating the moving body 100 in the movement direction. In this step, the control device 201 does not change (maintains) the direction of the face and the torso of the avatar 105.

In the embodiment described above, the image 404 of the moving body environment captured by the image capturing unit 104 is displayed on the display device 311 of the HMD 110. Instead of the HMD 110, a device not expected to be worn on the head of the user 120 (for example, a smartphone) may be used. The posture of such a device may or may not be detectable. In a case where the posture of the device is not detectable, the operation using the posture detection in the embodiment described above is omitted.

### Summary of the embodiments

(Item 1) A control device (301) of a display device (311), the control device characterized by comprising:
acquiring means for acquiring a plurality of images (404) of an environment around a moving body (100) captured at different times by an image capturing unit (104) mounted on the moving body;
display control means for sequentially displaying the plurality of images on the display device;
requesting means for requesting the moving body to rotate; and
estimation means for estimating an amount of rotation of the moving body based on the plurality of images and a time stamp attached to each of the plurality of images.

According to this item, the amount of rotation of the moving body can be estimated accurately. This improves the convenience of the user.

(Item 2) The control device according to Item 1, wherein the estimation means determines an estimated value of the amount of rotation of the moving body at a first time based on
an amount of rotation determined based on an image to which a time stamp at the first time is attached,
an estimated value of the amount of rotation of the moving body determined for a second time before the first time,
a time difference between the first time and the second time, and
a rotating speed of the moving body.

According to this item, the amount of rotation of the moving body can be accurately estimated based on the rotating speed of the moving body.

(Item 3) The control device according to Item 2, wherein the estimation means estimates the rotating speed of the moving body based on a comparison between an image to which a time stamp at the first time is attached and an image to which a time stamp at the second time is attached.

According to this item, the rotating speed of the moving body can be estimated based on the comparison between two images.

(Item 4) The control device according to Item 2 or Item 3, wherein the estimation means estimates the rotating speed of the moving body based on a profile of the rotating speed of the moving body determined in advance.

According to this item, the rotating speed of the moving body can be estimated based on the profile.

(Item 5) The control device according to any one of Item 2 to Item 4, wherein
the acquiring means further acquires an amount of rotation and a rotating speed of the moving body estimated by the moving body, and
the estimation means determines the estimated value of the amount of rotation of the moving body at the first time further based on the amount of rotation and the rotating speed of the moving body determined for a time before the first time by the moving body.

According to this item, the amount of rotation of the moving body can be estimated more accurately.

(Item 6) A display system comprising:
the control device according to any one of Items 1-5; and
a display device controlled by the control device.

According to this item, a display system that achieves the above advantages is provided.

(Item 7) The display system according to Item 6, wherein the display system is a head mounted display.

According to this item, a head mounted display that achieves the above advantages is provided.

(Item 8) A program for causing a computer to function as the control device according to any one of Items 1-5.

According to this item, a program that implements the advantages described above is provided.

(Item 9) A method of controlling a display device (311), the method comprising:
acquiring a plurality of images (404) of an environment around a moving body (100) captured at different times by an image capturing unit (404) mounted on the moving body;
sequentially displaying the plurality of images on the display device;
requesting the moving body to rotate; and
estimating an amount of rotation of the moving body based on the plurality of images and a time stamp attached to each of the plurality of images.

According to this item, the amount of rotation of the moving body can be estimated accurately. This improves the convenience of the user.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A control device (301) of a display device (311), the control device **characterized by** comprising:
acquiring means for acquiring a plurality of images (404) of an environment around a moving body (100) captured at different times by an image capturing unit (104) mounted on the moving body;
display control means for sequentially displaying the plurality of images on the display device;
requesting means for requesting the moving body to rotate; and
estimation means for estimating an amount of rotation of the moving body based on the plurality of images and a time stamp attached to each of the plurality of images.

2. The control device according to claim 1, wherein the estimation means determines an estimated value of the amount of rotation of the moving body at a first time based on
an amount of rotation determined based on an image to which a time stamp at the first time is attached,
an estimated value of the amount of rotation of the moving body determined for a second time before the first time,
a time difference between the first time and the second time, and
a rotating speed of the moving body.

3. The control device according to claim 2, wherein the estimation means estimates the rotating speed of the moving body based on a comparison between an image to which a time stamp at the first time is attached and an image to which a time stamp at the second time is attached.

4. The control device according to claim 2 or 3, wherein the estimation means estimates the rotating speed of the moving body based on a profile of the rotating speed of the moving body determined in advance.

5. The control device according to any one of claims 2 to 4, wherein
the acquiring means further acquires an amount of rotation and a rotating speed of the moving body estimated by the moving body, and
the estimation means determines the estimated value of the amount of rotation of the moving body at the first time further based on the amount of rotation and the rotating speed of the moving body determined for a time before the first time by the moving body.

6. A display system comprising:
the control device according to any one of claims 1-5; and
a display device controlled by the control device.

7. The display system according to claim 6, wherein the display system is a head mounted display.

8. A program for causing a computer to function as the control device according to any one of claims 1-5.

9. A method of controlling a display device (311), the method **characterized by** comprising:
acquiring a plurality of images (404) of an environment around a moving body captured at different times by an image capturing unit (404) mounted on the moving body;
sequentially displaying the plurality of images on the display device;
requesting the moving body to rotate; and
estimating an amount of rotation of the moving body based on the plurality of images and a time stamp attached to each of the plurality of images.
